# EUROPÄISCHE PATENTSCHRIFT

(11) **EP 2 220 738 B1**
(45) Veröffentlichungstag und Bekanntmachung des Hinweises auf die Patenterteilung: **17.08.2011**
(21) Anmeldenummer: 08803844.3
(22) Anmeldetag: 08.09.2008
(51) Int. Cl.: H02H 7/08, H02H 3/26, H02M 1/32

(54) **ANTRIEBSSYSTEM UND ZUGEHÖRIGES STEUERVERFAHREN**
DRIVE SYSTEM AND ASSOCIATED CONTROL METHOD
SYSTÈME D'ENTRAÎNEMENT ET PROCÉDÉ DE COMMANDE CORRESPONDANT

(30) Priorität: 14.12.2007 DE 102007060188
(43) Veröffentlichungstag der Anmeldung: 25.08.2010
(73) Patentinhaber: Siemens Aktiengesellschaft, 80333 München (DE)
(72) Erfinder: BAKRAN, Mark-Matthias, 91052 Erlangen (DE)
(86) Internationale Anmeldenummer: PCT/EP2008/061876
(87) Internationale Veröffentlichungsnummer: WO 2009/077214

(56) Entgegenhaltungen:
- EP-A- 0 295 415
- JP-A- 60 110 539
- JP-A- 2005 117 797
- US-A- 4 468 572
- US-A1- 2003 160 286

## Beschreibung

Die Erfindung bezeiht sich auf ein Antriebssystem mit einem Antriebsstromrichter, einer permanent erregten Synchronmaschine und eine Steuereinrichtung, wobei die permanent erregte Synchronmaschine klemmenseitig mittels Verbindungs-Leitungen mit Ausgängen des Antriebsstromrichter elektrisch leitend verbunden ist, wobei in wenigstens zwei Verbindungs-Leitungen jeweils ein Halbleiterschalter angeordnet sind, die steuerungsseitig jeweils mit einem Steuer-Ausgang der Steuereinrichtung verknüpft sind und wobei die Steuereinrichtung eingangsseitig mit einem Fehlerausgang und ausgangsseitig mit Steuereingängen des Antriebsstromrichters verbunden ist und auf ein Verfahren zur Steuerung dieses Antriebssystems.

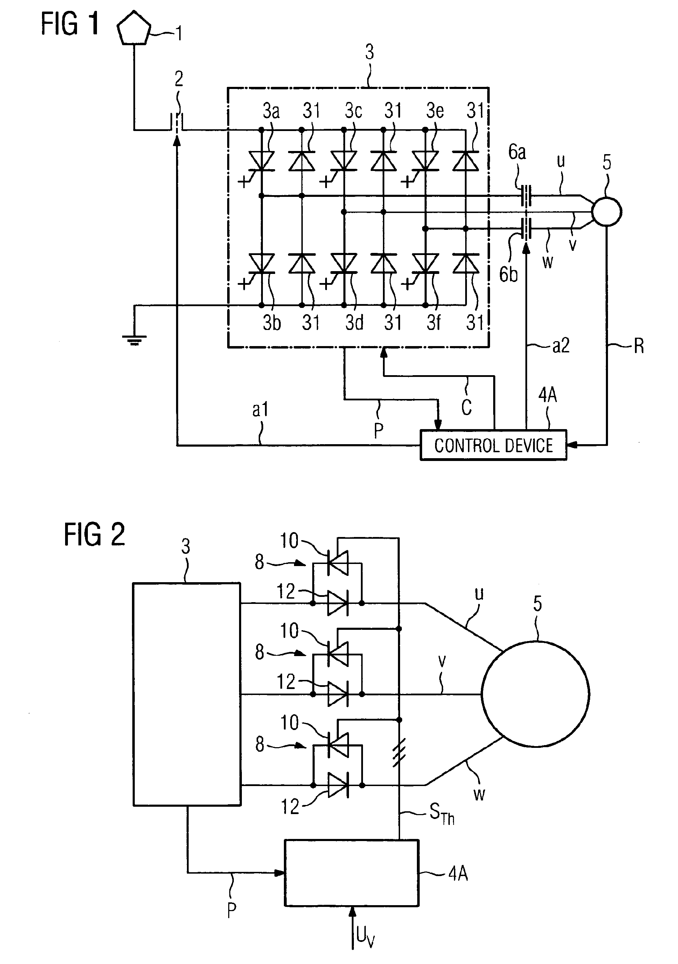

Ein gattungsgemäßes Antriebssystem ist aus der EP 0 718 143 A1, insbesondere der Figur 1, bekannt. Anhand dieser Figur 1 wird das Antriebssystem näher beschrieben. In der Figur 1 sind ein Antriebsstromrichter mit 3, eine permanent erregte Synchronmaschine mit 5, eine Steuereinrichtung mit 4A und die Schalter in wenigstens zwei Verbindungs-Leitungen u und w mit 6a und 6b bezeichnet. Als Antriebsstromrichter 3 ist ein selbstgeführter Pulsstromrichter vorgesehen, der als Stromrichterventil jeweils eine Parallelschaltung aus einem abschaltbaren Thyristor 3a,3b,3c,3d,3e und 3f und einer Freilauf-Diode 31 aufweist. Jede Freilauf-Diode 31 ist elektrisch antiparallel zu einem abschaltbaren Thyristor 3a,3b,3c,3d,3e und 3f geschaltet. Die abschaltbaren Thyristoren 3a,3b,3c,3d,3e und 3f sind auch als GTO-Thyristoren (Gate Turn Off-Thyristoren) bekannt. Der Antriebsstromrichter 3 wird in dem Antriebssystem der Figur 1 als Wechselrichter betrieben, so dass aus einer gleichspannungsseitig anstehenden Gleichspannung wechselspannungsseitig drei Wechselspannungen generiert werden.

Die Steuereinrichtung 4A ist ausgangsseitig mit Steuereingängen des Antriebsstromrichters 3 und der beiden Schalter 6a und 6b verknüpft. Eingangsseitig ist diese Steuereinrichtung 4A einerseits mit einem nicht näher dargestellten Sensor der im Antriebsstromrichter 3 montiert ist, und andererseits mit einem nicht näher dargestellten Rotorlagergeber verbunden. Dadurch gelangen ein Signal P vom Antriebsstromrichter 3 und ein Signal R vom Rotorlagergeber zur Steuereinrichtung 4A. Diese Steuereinrichtung 4A generiert Steuersignale C für die abschaltbaren Thyristoren 3a,3b,3c,3d,3e und 3f eines jeden Stromrichterventils des Antriebsstromrichters 3 und Steuersignale a2 für die beiden Schalter 6a und 6b.

Gleichspannungsseitig ist dieser Antriebsstromrichter 3 plusseitig über einen Leistungsschütz 2 mit einem Stromabnehmer 1 und minusseitig mit einem Bezugspotential (Erdpotential) elektrisch leitend verbunden. Bei diesem dargestellten Antriebssystem handelt es sich um ein Antriebssystem für ein elektrisches Fahrzeug, insbesondere einem schienengebundenen Fahrzeug.

Sobald ein oder mehrere abschaltbare Thyristoren 3a,3b,3c,3d, 3e und/oder 3f eine Fehlfunktion aufweisen, kann dieser Antriebsstromrichter keine Klemmspannung der permanent erregten Synchronmaschine 5 mehr anbieten. Da es sich bei der permenant erregten Synchonmaschine 5 um einen Antriebsmotor, beispielsweise eines Bahnfahrzeugs, handelt, und dieses Fahrzeug weiterrollt, wird diese permanent erregte Synchronmaschine 5 als Generator betrieben. Dadurch treibt die permanent erregte Synchronmaschine 5 in der Betriebsart "Generator" einen Kurzschlussstrom durch die angeschlossenen Verbindungs-Leitungen u,v und w und den entsprechenden Halbleitern 3a,3b,3c,3d,3e und 3f der Stromrichterventile des Antriebsstromrichters 3. Dadurch werden diese Halbleiter 3a,3b,3c,3d,3e und 3f und die permanent erregte Synchronmaschine 5 unzulässig erwärmt.

Damit kein Kurzschlussstrom in der angegebenen Weise fließen kann, sind die beiden Schalter 6a und 6b in den Verbindungs-Leitungen u und w angeordnet. Sobald ein Halbleiter 3a,3b,3c, 3d,3e und 3f eines Stromrichterventils des Antriebsstromrichters 3 eine Fehlfunktion aufweist, wird dieser Zustand mittels des Signals P der Steuereinrichtung 4A gemeldet. Diese generiert darauf ein Signal a2, mit dem die Schalter 6a und 6b, die während des normalen Betriebes geschlossen sind, geöffnet werden.

Ein weiteres gattungsgemäßes Antriebssystem ist aus der JP 2005 117797 A bekannt. Dieses Antriebssystem unterscheidet sich vom Antriebssystem gemäß der EP 0 718 143 A1 dadurch, dass der Antriebsstromrichter als Stromrichterventile Insulated-Gate-Bipolar-Transistoren (IGBT) jeweils mit einer antiparallel geschalteten Freilaufdiode aufweist. Außerdem ist in jeder Verbindungs-Leitung zwischen Antriebsstromrichter und permanent erregten Synchronmaschine jeweils ein Wechselstromschalter angeordnet. Wie ein derartiger Wechselstromschalter ausgebildet sein kann, ist dieser JP-Offenlegungsschrift nicht entnehmbar.

Dieser EP 0 718 143 A1 ist außerdem zu entnehmen, dass als Schalter 6a und 6b auch Halbleiterschalter vorgesehen werden können. Wie ein solcher Halbleiterschalter aufgebaut sein kann, ist dieser europäischen Offenlegungsschrift jedoch nicht zu entnehmen.

Der JP 60110539 ist zu entnehmen, dass als Halbleiterschalter für einen Trenner/Unterbrecher ein abschaltbarer Thyristor mit antiparallel geschalteter Freilaufdiode verwendet werden kann. Ein derartiger abschaltbarer Thyristor, der auch als Gate-Turn-Off-Thyristor (GTB) bezeichnet wird, gehört ebenso wie Insulated-Gate-Bipolar-Transistoren (IGBT) zu den abschaltbaren Halbleiterschaltern.

Der Erfindung liegt nun die Aufgabe zugrunde, eine Ausführungsform für diese Halbleiterschalter anzugeben, wodurch man eine einfach zu steuernde Schutzschaltung für den Antriebsumrichter dieses Antriebssystems erhält.

Diese Aufgabe wird mit den Merkmalen des kennzeichnenden Teils des Anspruchs 1 erfindungsgemäß gelöst.

Dadurch, dass als Halbleiterschalter jeweils ein einen Thyristor mit antiparallel geschalteter Diode aufweisender steuerbarer asymmetrisch sperrender Halbleiterschalter vorgesehen ist, der jeweils derart in eine Verbindungs-Leitung zwischen Antriebsstromrichter und permanent erregter Synchronmaschine angeordnet ist, dass jeder Thyristor anodenseitig und jede Diode kathodenseitig mit einer Klemme der permanent erregten Synchronmaschine verknüpft ist, muss nur ein Steuersignal generiert werden, dass allen Thyristoren zugeführt wird.

Durch die Verwendung eines derartig ausgebildeten steuerbaren asymmetrisch sperrenden Halbleiterschalters vereinfacht sich die Steuerung derart, dass im Fehlerfall kein Steuersignal mehr generiert werden muss. Sobald ein durch einen Thyristor, der leitend aber nicht mehr angesteuert wird, fließender Strom durch Null geht, erlöscht dieser Thyristor und trennt einen zugehörigen Strompfad auf. Somit entstehen im Fehlerfall keine Verluste in den steuerbaren asymmetrisch sperrenden Halbleiterschaltern.

Bei einer vorteilhaften Ausführungsform des Antriebssystems sind die vorhandenen steuerbaren asymmetrisch sperrenden Halbleiterschalter im Antriebsstromrichter angeordnet, insbesondere mit dessen Kühlanlage wärmeleitend verbunden. Damit ist die Kühlung der Halbleiter eines jeden steuerbaren asymmetrisch sperrenden Halbleiterschalters sichergestellt.

Durch die Verwendung von einem Thyristor und einer dazu antiparallel geschalteten Diode als steuerbarer asymmetrisch sperrender Halbleiterschalter wird nur ein periodisches Ansteuersignal für den Thyristor benötigt. Im Normalbetrieb werden die Thyristoren der vorhandenen asymmetrisch sperrenden halbleiterschalter periodisch angesteuert, so dass diese für jede negative Halbwelle der Klemmspannung und die zugehörige antiparallel geschaltete Diode für jede positive Halbwelle dieser Klemmspannung leitend ist. D.h., die Verbindungs-Leitungen zwischen Antriebsstromrichter und permanent erregte Synchronmaschine, die einen steuerbaren asymmetrisch sperrenden Halbleiterschalter aufweisen, sind während des Betriebes des Antriebsstromrichters durchverbunden.

Im Fehlerfall muss dafür gesorgt werden, dass die permanent erregte Synchronmaschine in der Betriebsart "Generator" keinen Kurzschlussstrom mehr in den Verbindungs-Leitungen zum Antriebsstromrichter und zurück zur permanent erregten Synchronmaschine treiben kann. Dies wird dadurch erreicht, dass lediglich das periodische Ansteuersignal für die Thyristoren der in jeder Verbindungs-Leitung angeordneten steuerbaren asymmetrisch sperrenden Halbleiterschalter unterbunden wird.

Im einfachsten Fall wird dieses periodische Ansteuersignal im Fehlerfall erst gar nicht generiert. Wird ein leitender Thyristor eines jeden vorhandenen steuerbaren asymmetrisch sperrenden Halbleiterschalters nicht mehr angesteuert, so sperrt dieser, sobald ein durch diesen Thyristor fließender Strom durch Null geht. Somit erhält man eine sehr einfach zu steuernde Schutzschaltung für den Antriebsstromrichter.

Zur weiteren Erläuterung der Erfindung wird auf die Zeichnung Bezug genommen, in der eine Ausführungsform eines Antriebssystems nach der Erfindung schematisch veranschaulicht ist.
- FIG 1: zeigt ein Blockschaltbild eines bekannten Antriebs- systems und in der
- FIG 2: ist ein Blockschaltbild eines Antriebssystems nach der Erfindung dargestellt.

Gegenüber der Ausführungsform gemäß der FIG 1 weist die erfindungsgemäße Ausführungsform des Antriebssystems nach FIG 2 als Halbleiterschalter steuerbare asymmetrisch sperrende Halbleiterschalter 8 auf. Jeder steuerbarer asymmetrisch sperrender Halbleiterschalter 8 weist einen Thyristor 10 und eine Diode 12 auf, die antiparallel zum Thyristor 10 geschaltet ist. Dieser steuerbarer asymmetrisch sperrender Halbleiterschalter 8 ist jeweils derart in eine Verbindungs-Leitung u,v oder w zwischen Antriebsstromrichter 3 und permanent erregte Synchronmaschine 5 angeordnet, das die Diode 12 für positive Halbwellen und die Thyristoren 10 für negative Halbwellen der vom Antriebsstromrichter 3 generierten Klemmspannung leitend sind.

Während des fehlerfreien Betriebes des Antriebsstromrichters 3 werden die Thyristoren 10 der steuerbaren asymmetrisch sperrenden Halbleiterschalter 8 periodisch angesteuert. Dazu wird in der Steuereinrichtung 4A ein Ansteuersignal S_{Th} generiert. Durch diese periodische Ansteuerung eines jeden Thyristors 10 ist der Antriebsstromrichter 3 mit der permanent erregten Synchronmaschine 5 elektrisch leitend verbunden. Im Fehlerfall, d.h., der Antriebsstromrichter 3 generiert ein Fehlersignal P, werden die Ansteuersignale S_{Th} der Thyristoren 10 unterdrückt, so dass diese Thyristoren 10 beim nächsten Nulldurchgang des durchfließenden Stromes sperren. Die Ansteuersignale S_{TH} werden dadurch unterdrückt, dass diese im Fehlerfall nicht mehr generiert werden. Durch die Sperrung der Thyristoren 10 aller steuerbaren asymmetrisch sperrenden Halbleiterschalter 8 in den Verbindugns-Leitungen u, v und w existiert kein Strompfad mehr der einen Kurzschlussstrom von der permanent erregten Synchronmaschine 5 zum Antriebsstromrichter 3 und zurück zur Synchronmaschine 5 führen kann. Im Fehlerfall wird bei der erfindungsgemäßen Ausgestaltung der Halbleiterschalter kein Steuersignal mehr benötigt, um diese auszuschalten.

Die Steuereinrichtung 4A wird gemäß FIG 2 eine Versorgungsspannung Uᵥ zugeführt. Diese kann aus irgendwelchen Gründen mal ausfallen. Selbst in diesem Fall werden die Thyristoren 10 nicht mehr mit einem periodischen Ansteuersignal S_{Th} angesteuert, da die Steuereinrichtung 4A wegen fehlender Versorgungsspannung Uᵥ nicht betriebsbereit ist. Somit geht die Schutzschaltung dieses Antriebssystems von selbst in den sicheren Zustand (Trennung von Antriebsstromrichter 3 und permanent erregten Synchronmaschine 5).

Da diese Thyristoren 10 der vorhandenen steuerbaren asymmetrisch sperrenden Halbleiterschalter 8 nur im störungsfreien Betrieb des Antriebsstromrichters 3 leitend geschaltet werden, entstehen Verluste nur während des störungsfreien Betriebes des Antriebsstromrichters 3. Um diese Thyristoren 10 zu kühlen, sind diese im Antriebsstromrichter 3 integriert. D.h., diese Thyristoren 10 sind wärmeleitend mit der Kühlanlage, insbesondere dem Kühlkörper, der Stromrichterventile des Antriebsstromrichters 3 verbunden. Dadurch ist die Kühlung der steuerbaren asymmetrisch sperrenden Halbleiterschalter 8 im regulären Betrieb des Antriebssystems sichergestellt. Im Fehlerfall des Antriebsstromrichters 3, der auch ein Kühlungsausfall sein kann, entstehen keine Verluste in der Schutzschaltung.

## Patentansprüche

1. Antriebssystem mit einem Antriebsstromrichter (3), einer permanent erregten Synchronmaschine (5) und einer Steuereinrichtung (4A), wobei die permanent erregte Synchronmaschine (5) klemmenseitig mittels Verbindungs-Leitungen (u,v,w) mit Ausgängen des Antriebsstromrichters (3) elektrisch leitend verbunden ist, wobei in wenigstens zwei Verbindungs-Leitungen (u,w) jeweils ein Halbleiterschalter angeordnet ist, der steuerungsseitig mit einem entsprechenden Steuer-Ausgang der Steuereinrichtung (4A) verknüpft ist, und wobei die Steuereinrichtung (4A) eingangsseitig mit einem Fehlerausgang und ausgangsseitig mit Steuereingängen des Antriebsstromrichters (3) verbunden ist, **dadurch gekennzeichnet, dass** in jeder Verbindungs-Leitung (u,v,w) zwischen Antriebsstromrichter (3) und permanent erregter Synchronmaschine (5) jeweils ein einen Thyristor (10) mit antiparallel geschalteter Diode (12) aufweisender steuerbarer asymmetrisch sperrender Halbleiterschalter (8) als Halbleiterschalter vorgesehen ist, wobei jeder Thyristor (10) anodenseitig und jede Diode (12) kathodenseitig mit einer Klemme der permanenterregten Synchronmaschine (5) verknüpft ist.

2. Antriebssystem nach Anspruch 1, **dadurch gekennzeichnet, dass** die asymmetrisch sperrenden Halbleiterschalter (8) im Antriebsstromrichter (3) angeordnet sind.

3. Antriebssystem nach Anspruch 2, **dadurch gekennzeichnet, dass** die asymmetrisch sperrenden Halbleiterschalter (8) mit einer Kühlanlage des Antriebsstromrichters (3) wärmeleitend verknüpft sind.

4. Verfahren zur Steuerung eines Antriebssystems mit einem Antriebsstromrichter (3), einer permanent erregten Synchronmaschine (5) und einer Steuereinrichtung (4A), wobei die permanent erregte Synchronmaschine (5) klemmenseitig mittels Verbindungs-Leitungen (u,v,w) mit Ausgängen des Antriebsstromrichters (3) elektrisch leitend verbunden ist, **dadurch gekennzeichnet, dass** in jeder Verbindungs-Leitung (u,v,w) ein einen Thyristor (10) mit antiparallel geschalteter Diode (12) aufweisender steuerbarer asymmetrisch sperrender Halbleiterschalter (8) vorgesehen ist, wobei während des Betriebes des Antriebsstromrichters (3) die Thyristoren (10) der vorhandenen asymmetrisch sperrender Halbeiterschalter (8) periodisch angesteuert werden.

5. Verfahren nach Anspruch 4, **dadurch gekennzeiehnet**, dass im Fehlerfall des Antriebsstromrichters (3) die Thyristoren (10) der vorhandenen asymmetrisch sperrenden Halbleiterschalter (8) nicht mehr angesteuert werden.

## Claims

1. Drive system comprising a drive converter (3), a permanent-magnet synchronous machine (5) and a control device (4A), wherein the permanent-magnet synchronous machine (5), on the terminal side, is electrically conductively connected by means of connecting lines (u, v, w) to outputs of the drive converter (3), wherein a respective semiconductor switch is arranged in at least two connecting lines (u, w), which semiconductor switch, on the control side, is linked to a corresponding control output of the control device (4A), and wherein the control device (4A) is connected to a fault output on the input side and to control inputs of the drive converter (3) on the output side, **characterized in that** in each case a controllable asymmetrically blocking semiconductor switch (8) having a thyristor (10) with diode (12) reverse-connected in parallel is provided as the semiconductor switch in each connecting line (u, v, w) between the drive converter (3) and the permanent-magnet synchronous machine (5), wherein each thyristor (10) is linked anodally and each diode (12) is linked cathodally to a terminal of the permanent-magnet synchronous machine (5).

2. Drive system according to Claim 1, **characterized in that** the asymmetrically blocking semiconductor switches (8) are arranged in the drive converter (3).

3. Drive system according to Claim 2, **characterized in that** the unidirectionally asymmetrically blocking semiconductor switches (8) are thermally conductively linked to a cooling system of the drive converter (3).

4. Method for controlling a drive system comprising a drive convertor (3), a permanent-magnet synchronous machine (5) and a control device (4a), wherein the permanent-magnet synchronous machine (5), on the terminal side, is electrically conductively connected by means of connecting lines (u, v, w) to outputs of the drive convertor (3), **characterized in that** a controllable asymmetrically blocking semiconductor switch (8) having a thyristor (10) with diode (12) reverse-connected in parallel is provided in each connecting line (u, v, w), wherein the thyristors (10) of the asymmetrically blocking semiconductor switches (8) present are driven periodically during the operation of the drive converter (3).

5. Method according to Claim 4, **characterized in that** the thyristors (10) of the asymmetrically blocking semiconductor switches (8) present are no longer driven in the fault case of the drive converter (3).

## Revendications

1. Système d'entraînement comprenant un convertisseur ( 3 ) de courant d'entraînement, un moteur ( 5 ) synchrone à excitation permanente et un dispositif ( 4A ) de commande, dans lequel le moteur ( 5 ) synchrone à excitation permanente est relié, d'une manière conductrice de l'électricité, du côté borne au moyen de lignes ( u, v, w ) de liaison à des sorties du convertisseur ( 3 ) du courant d'entraînement, dans lequel, dans au moins deux lignes ( u, w ) de liaison, est monté respectivement un commutateur à semiconducteur, qui est combiné du côté commande à une sortie de commande correspondante du dispositif ( 4A ) de commande, et dans lequel le dispositif ( 4A ) de commande est relié du côté entrée à une sortie de défaut et, du côté sortie, à des entrées de commande du convertisseur ( 3 ) de courant d'entraînement, **caractérisé en ce que**, dans chaque ligne ( u, v, w ) de liaison il est prévu, entre le convertisseur ( 3 ) de courant d'entraînement et le moteur ( 5 ) synchrone à excitation permanente, respectivement en tant que commutateur à semiconducteur, un commutateur ( 8 ) à semiconducteur ayant un thyristor ( 10 ) et une diode ( 12 ) montée tête bêche, pouvant être commandé et bloquant de manière asymétrique, dans lequel chaque thyristor ( 2 ) est combiné du côté anode et chaque diode ( 12 ) est combinée du côté cathode à une borne du moteur ( 5 ) synchrone à excitation permanente.

2. Système d'entraînement suivant la revendication 1, **caractérisé en ce que** les commutateurs ( 8 ) à semiconducteur bloquant de manière asymétrique sont montés dans le convertisseur ( 3 ) de courant d'entraînement.

3. Système d'entraînement suivant la revendication 2, **caractérisé en ce que** les commutateurs ( 8 ) à semiconducteur bloquant de manière asymétrique sont combinés d'une manière conductrice de la chaleur à une installation de refroidissement du convertisseur ( 3 ) de courant d'entraînement.

4. Procédé de commande d'un système d'entraînement comprenant un convertisseur ( 3 ) de courant d'entraînement, un moteur ( 5 ) synchrone à excitation permanente et un dispositif ( 4A ) de commande, dans lequel le moteur ( 5 ) synchrone à excitation permanente est relié d'une manière conductrice de l'électricité du côté borne, au moyen de lignes ( u, v, w ) de liaison, à des sorties du convertisseur ( 3 ) de courant d'entraînement, **caractérisé en ce que** il est prévu, dans chaque ligne ( u, v, w ) de liaison, un commutateur ( 8 ) à semiconduteur ayant un thyristor ( 10 ) et une diode ( 12 ) montée tête bêche, pouvant être commandé et bloquant de manière asymétrique, dans lequel, pendant le fonctionnement du convertisseur ( 3 ) de courant d'entraînement, on commande périodiquement les thyristors ( 10 ) des commutateurs ( 8 ) à semiconducteur présents bloquant de manière asymétrique.

5. Procédé suivant la revendication 4, **caractérisé en ce que** dans le cas de défaillance du convertisseur ( 3 ) de courant d'entraînement, on ne commande plus les thyristors ( 10 ) des commutateurs ( 8 ) à semiconducteur présents bloquant de manière asymétrique.
